# EUROPÄISCHE PATENTANMELDUNG

(11) **EP 4 496 274 A1**
(43) Veröffentlichungstag der Anmeldung: **22.01.2025**
(21) Anmeldenummer: 24169513.9
(22) Anmeldetag: 10.04.2024
(51) Int. Cl.: H04L 12/28

(54) **SMART-HOME-SYSTEM UND VERFAHREN ZUM BETRIEB EINES SMART-HOME-SYSTEMS**

(30) Priorität: 21.07.2023 DE 102023119414
(71) Anmelder: Theben AG, 72401 Haigerloch (DE)
(72) Erfinder: Gulde, Thomas, 72351 Geislingen (DE); Henle, Thomas, 72414 Rangendingen (DE)
(74) Vertreter: Westphal, Mussgnug & Partner Patentanwälte mbB

(57) **Zusammenfassung**

Bereitgestellt wird Smart-Home-System (100) mit einer Kommunikationseinrichtung (110) zur Herstellung einer Verbindung des Smart-Home-Systems (100) zum Internet (102), das ein Hardware-Wallet (130) aufweist, das direkt oder indirekt mit der Kommunikationseinrichtung (110) verbunden ist.

## Beschreibung

Smart-Home-Systeme finden derzeit eine immer weitere Verbreitung. Derartige Systeme bewirken eine Vernetzung verschiedener Geräte und Gewerke (wie z.B. Licht, Klima, Antriebe), welche untereinander Informationen austauschen, automatisch Aktionen ausführen können und welche der Nutzer dank der Vernetzung frei nach seinen Präferenzen optimieren und steuern kann. Ein Smart-Home-System ist dabei typischerweise offen für weitere Services und Dienste, welche optional vom Kunden hinzugefügt werden können, der damit sein Smart-Home-System um weitere Produkte und Funktionen erweitern kann.

Konkret kann ein Ausführungsbeispiel eines Smart-Home-Systems, beispielsweise über Sensoren wichtige Parameter im Haus und ums Haus herum erfassen (z.B. Temperatur, Helligkeit, Co2, Feuchtigkeit, Sonnenstand, Energieverbrauch, Energieproduktion, ...) und mit diesen Informationen und einem programmierbaren Regelwerk entsprechend Aktoren automatisch ansteuern, um gewünschte Zustände herbeizuführen (Beleuchtung, Wärme, Schattierung ....).

Insbesondere dann, wenn das Smart-Home-System eine Kommunikationseinrichtung zur Verbindung mit dem Internet aufweist, die vorzugsweise als Switch ausgeführt sein kann, kann auch eine Fernsteuerung, eine Kontrolle oder auch eine Fernwartung der vernetzten Geräte durch einen dazu autorisierten Benutzer erfolgen oder eine Alarmierung eines Benutzers im Fall der Detektion eines vorab definierten Ereignisses bewirkt werden.

Die Aufgabe der Erfindung besteht darin, ein Smart-Home-System und ein Verfahren zum Betrieb eines solchen Smart-Home-Systems bereitzustellen, das weitere Einsatz- und Anwendungsmöglichkeiten erschließt. Diese Aufgaben werden gelöst durch ein Smart-Home-System mit den Merkmalen des Patentanspruchs 1 bzw. durch ein Verfahren zum Betrieb eines Smart-Home-Systems mit den Merkmalen des Patentanspruchs 7. Vorteilhafte Weiterbildungen der Erfindung sind Gegenstand der abhängigen Ansprüche.

Das erfindungsgemäße Smart-Home-System hat eine Kommunikationseinrichtung zur Verbindung mit dem Internet, die vorzugsweise als Switch ausgeführt sein kann. Erfindungswesentlich ist, dass das Smart-Home-System ein Hardware-Wallet aufweist, das direkt oder indirekt mit der Kommunikationseinrichtung zur Verbundung mit dem Internetverbunden ist. Bei einer indirekten Verbindung zur Kommuniaktionseinrichtung zur Verbindung mit dem Internet erfolgt die Kommunikation des Hardware-Wallets mit diesem über ein weiteres, zwischengeschaltetes Gerät, bei einer direkten Verbindung erfolgt sie hingegen ohne ein solches zwischengeschaltetes Gerät.

Durch die Integration eines Hardware-Wallets in das Smart-Home-System wird für das gesamte Heimnetzwerk Zugang zu Krypto-Bezahlsystemen und Blockchain-Netzwerken geschaffen. Gleichzeitig dient das HW-Wallet dabei als zentrale Anlaufstelle im eigenen Haus, dies verhindert dass "Coins" etc. in Cloud-Systemen gespeichert werden müssen und erhöht somit die Sicherheit bei der Aufbewahrung der jeweiligen Krypto-Währung.

In einer bevorzugten Ausführungsform weist das Smart-Home-System mindestens eine passive Systemkomponente auf und das Hardware-Wallet ist direkt oder indirekt, insbesondere indirekt über eine Smart-Home-Zentrale, mit der mindestens einen passiven Systemkomponente verbunden. Diese passiven Systemteile, z.B. Sicherungen, Relais und ähnliche Komponenten waren bislang regelmäßig nicht mit dem Internet verbunden. Die Verbindung mit dem Hardware-Wallet System kann z.B. durch integrierte Bussysteme, digitale und/oder analoge Eingänge hergestellt werden und somit kann -wegen der Verbindung zwischen Hardware-Wallet und der Kommunikationseinrichtung zur Verbindung mit dem Internet- eine Verbindung auch solcher Geräte zum Internet herbeigeführt werden. Auf diese Weise können beispielsweise solche passiven Geräte direkt abrechnungsrelevanten Services, wie exemplarisch nachfolgend am Beispiel einer Lichtmiete erläutert wird, zugeführt werden.

Gemäß einer anderen vorteilhaften Weiterbildung der Erfindung weist das Smart-Home-System mindestens eine aktive Systemkomponente auf, die direkt oder indirekt, insbesondere über eine Smart-Home-Zentrale, mit der Kommunikationseinrichtung zur Verbindung mit dem Internet verbunden ist. Vorzugsweise ist dabei mindestens eine dieser aktiven Systemkomponenten ebenfalls direkt oder indirekt mit dem Hardware-Wallet verbunden, so dass auch die aktiven Systemkomponenten auf die lokal vorhandene Krypto-Währung zugreifen und diese einsetzen können.

Besonders bevorzugt ist es, wenn die Verbindung zum Hardware-Wallet direkt ist und über ein integriertes Bussystem, einen digitalen Eingang oder einen analogen Eingang hergestellt ist. Dies kann es insbesondere erlauben, das Hardware-Wallet auf einfache Weise mit dem Smart-Home-System zu verbinden bzw. es von diesem zu lösen, um es an einem anderen Ort oder mit einem anderen Smart-Home-System zu verwenden.

Besonders bevorzugt ist es dabei, wenn das Hardware-Wallet durch ein Zusatzmodul einer Smart-Home-Zentrale gebildet wird. Da die Smart-Home-Zentrale üblicherweise ohnehin mit allen oder fast allen weiteren Komponenten des Smart-Home-Systems verbunden ist, kann durch diese Maßnahme der Zugriff auf das Hardware-Wallet durch alle Komponenten des Smart-Home-Systems einfach gewährleistet werden.

Das erfindungsgemäße Verfahren zum Betrieb eines derartigen Smart-Home-Systems zeichnet sich dadurch aus, dass digitale Währungen lokal im eigenen Haus gespeichert werden.

In einer bevorzugten Weiterbildung des Verfahrens werden beim Betrieb des Smart-Home-Systems zumindest zeitweise passive Geräte, die nicht eigenständig internetfähig sind, direkt abrechnungsrelevanten Dienstleistungen zugeführt.

Besonders vorteilhaft ist eine Variante des Verfahrens, bei der ein Zugang zu Krypto-Bezahlsystemen und Blockchain-Netzwerken für das gesamte Heimnetzwerk geschaffen wird.

Die Erfindung wird nachfolgend anhand von Figuren, welche Ausführungsbeispiele darstellen, näher erläutert. Es zeigt:
- Fig. 1:: einen schematischen Aufbau eines Smart-Home-Systems
- Fig. 2:: den schematischen Ablauf bei der Verwendung eines Smart-Home-Systems zur Lichtmiete, und
- Fig. 3:: den schematischen Ablauf bei der Verwendung eines Smart-Home-Systems zum Arbeitszeitnachweis für einen Handwerker.

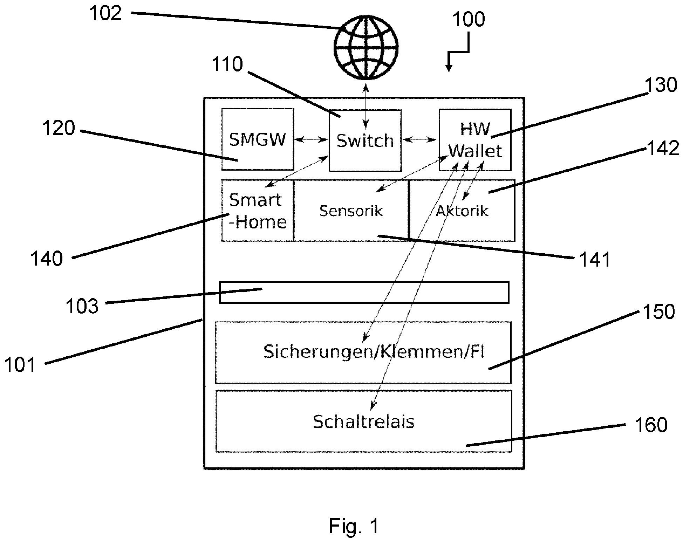

Figur 1 zeigt schematisch den Aufbau eines Ausführungsbeispiels für ein Smart-Home-System 100, das exemplarisch in einem Schaltschrank 101 angeordnet ist. In der Figur ist eine Signalkommunikation zwischen unterschiedlichen Komponenten des Smart-Home-Systems 100 durch Doppelpfeile dargestellt; darüber hinaus können unterschiedliche Komponenten des Smart-Home-Systems auch beispielsweise über ein Bus-System, das innerhalb des Schaltschranks 101 bereitgestellt ist, miteinander kommunizieren und/oder angesteuert werden.

Das Smart-Home-System 100 weist eine als Switch ausgeführte Kommunikationseinrichtung 110 zur Verbindung mit dem Internet auf, über die eine Verbindung internetfähiger, d.h. aktiver Systemkomponenten zum Internet 102 sichergestellt wird. Solche aktiven Systemkomponenten sind im dargestellten Beispiel insbesondere ein Smart Meter Gateway (SMGW) 120, ein Hardware-Wallet 130 und ein Smart-Home System 140 mit Sensorik 141 zum (Mess-) Datenempfang und Aktorik 142 zum Schalten und/oder Beeinflussen von Systemkomponenten des Smart-Home-Systems 100. Insbesondere kann das Smart-Home-System 100 so eingerichtet sein, dass über die hier als Switch ausgeführte eine Kommunikationseinrichtung 110 zur Verbindung mit dem Internet ein beliebiges zum Heimnetzwerk gehörendes internetfähiges Gerät Zugang zum Internet 102 hat.

Weitere Bestandteile des Smart-Home-Systems 100 sind passive Systemkomponenten 150,160, die typischerweise zumindest nicht selbständig aktiv kommunizieren, sondern allenfalls geschaltet werden und/oder deren Schaltzustände von aktiven Systemkomponenten abgefragt werden können. Solche passiven Systemkomponenten 150,160 sind beispielsweise Sicherungen und Klemmen oder Schaltrelais.

Die hier dargestellte Gruppierung der Komponenten ist optional und dient einer vereinfachten Darstellung; sie ist in einem realen Schaltschrank 101 nicht zwingend vorhanden. Wie durch die freie Hutschiene 103 symbolisiert wird, ist ein solches Smart-Home Systeme 100 regelmäßig durch weitere aktive und/oder passive Systemkomponenten erweiterbar.

Im dargestellten Ausführungsbeispiel ist das Hardware-Wallet 130, wie die Doppelpfeile verdeutlichen, so in das Smart-Home-System 100 integriert, dass es direkt mit der hier als Switch ausgeführten Kommunikationseinrichtung 110 zur Verbindung mit dem Internet, sowie mit der Sensorik 141 und der Aktorik 142 der Smart-Home-Zentrale 140 kommuniziert. Darüber hinaus ist in diesem Beispiel eine direkte Kommunikation des Hardware-Wallet 130 mit passiven Systemkomponenten 150,160, also den Sicherungen und Klemmen und Schaltrelais eingerichtet, die insbesondere in der Überwachung und/oder Registrierung von Schaltzuständen bzw. Schaltvorgängen bestehen kann, so dass in einer Blockchain 131 Schaltzustände oder Schaltvorgänge passiver (aber natürlich auch aktiver) Systemkomponenten hinterlegt werden können. Dazu können beispielsweise integrierte Bussysteme oder digitale oder analoge Eingänge benutzt werden.

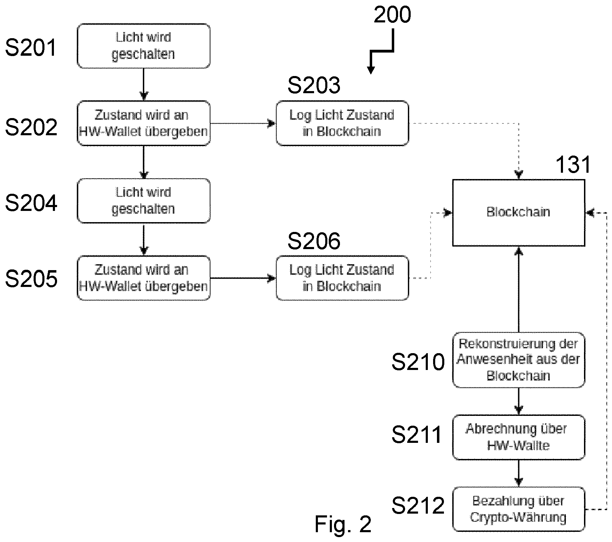

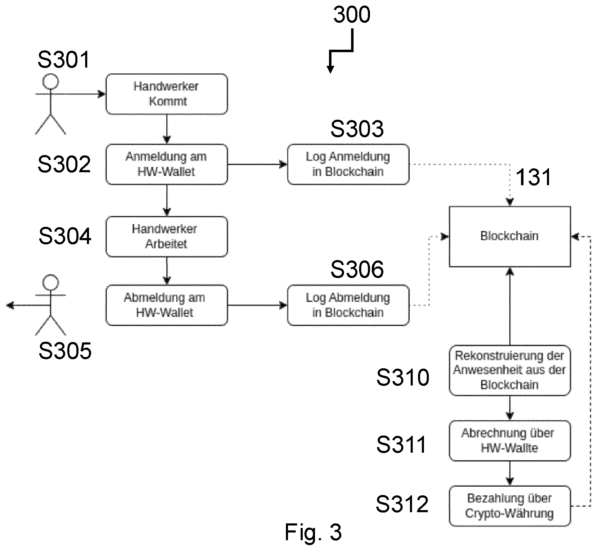

Durch die Kommunikation zwischen Sensorik 141 der Smart-Home-Zentrale 140 und Hardware-Wallet 130 bzw. Aktorik 142 der Smart-Home-Zentrale 140 und Hardware-Wallet 130 können auch an die Smart-Home-Zentrale 140 durch die Sensorik 141 gemeldete Zustände oder Ereignisse bzw. durch die Aktorik 142 veranlasste Schaltvorgänge an das Hardware-Wallet 130 gemeldet und in einer lediglich in den Figuren 2 und 3 dargestellten Blockchain 131 hinterlegt werden.

Neben einer sicheren, manipulationsresistenten Protokollierung solcher Ereignisse wird durch ein so aufgebautes Smart-Home-System 100 eine unmittelbare, ohne großen Aufwand detailliert aufschlüsselbare Abrechnung sowie eine unmittelbare Bezahlung genutzter Services in Kryptowährung ermöglicht. Exemplarische Beispiele dafür werden weiter unten anhand der Figuren 2 und 3 näher erläutert.

Eine vergleichbare Funktionalität kann auch gewährleistet werden, wenn das Hardware-Wallet 130 indirekt mit der hier als Switch ausgeführten Kommunikationseinrichtung 110 zur Verbindung mit dem Internet und/oder zumindest einigen der aktiven oder passiven Systemkomponenten des Smart-Home-Systems 100 verbunden ist. Dies kann beispielsweise dadurch erreicht werden, dass das Hardware-Wallet 130 als eine Zusatzkomponente der Smart-Home-Zentrale 140 realisiert wird, beispielsweise als ein Aufsteckmodul, das die Kommunikationsverbindungen der Smart-Home-Zentrale 140 zu anderen Systemkomponenten des Smart-Home-Systems 100 nutzt. Der Vorteil dieser Lösung liegt darin, dass das Hardware-Wallet 130 dann nicht mehr ortsfest verbaut sein muss, sondern portabel ausgeführt sein kann und auch anders genutzt werden kann.

Bei dem in Figur 2 exemplarisch dargestellten Verfahren 200 werden die zusätzlichen Möglichkeiten, die durch die Integration des Hardware-Wallets 130 in das Smart-Home System 100 geschaffen werden, genutzt, um eine Lichtmiete durchzuführen.

Im Schritt S201 erfolgt ein Schaltvorgang für eine Beleuchtung, beispielsweise durch Betätigung einer passiven Systemkomponente 160 in Gestalt eines Schaltrelais beim Einschalten der Beleuchtung. Diese Betätigung kann auch durch die Aktorik 141 der Smart-Home-Zentrale 140 erfolgen.

Der Wechsel des Schaltzustands des Schaltrelais wird im Schritt S202 an das Hardware-Wallet 130 übergeben, beispielsweise im Rahmen eines Auslesens der Schaltzustände des Schaltrelais oder in einem durch die Betätigung des Schaltrelais initiierten Prozesses, und im Schritt S203 in der Blockchain 131 hinterlegt.

Wird die Beleuchtung zu einem späteren Zeitpunkt im Schritt S204 erneut geschaltet, insbesondere ausgeschaltet, wird auch diese Änderung des Schaltzustands des Schaltrelais im Schritt S205 an das Hardware-Wallet 130 übergeben und im Schritt S206 in der Blockchain 131 hinterlegt.

Auf diese Weise werden die jeweiligen Schaltzustände der Beleuchtung manipulationssicher und lückenlos in der Blockchain 131 protokolliert, die dadurch zur Abrechnung der geschuldeten Lichtmiete genutzt werden kann.

Für diesen Abrechnungsprozess wird im Schritt S210 zunächst aus der Blockchain 131 die Anwesenheit von Licht, also die Benutzung der Beleuchtungsvorrichtung rekonstruiert und im Schritt S211 über das Hardware-Wallet 130 abgerechnet. Vorzugsweise erfolgt auch die Bezahlung im Schritt S212 unmittelbar unter Verwendung von im Hardware-Wallet 130 gespeicherten Kryptowährungen. Die Abrechnung bzw. Bezahlung wird ebenfalls in der Blockchain 131 vermerkt.

Bei dem in Figur 3 exemplarisch dargestellten Verfahren S300 erfolgt die Registrierung der Arbeitszeit eines Handwerkers und die Abrechnung der Arbeiten komplett über das Hardware-Wallet 130 des Smart-Home-Systems 100.

Im Schritt S301 kommt der Handwerker an und meldet sich im Schritt S302 am Hardware-Wallet 130 an. Dies kann beispielsweise dadurch realisiert sein, dass das Hardware-Wallet 130 über eine NFC Schnittstelle verfügt und der Handwerker ein entsprechendes Token oder Mobilgerät zur Anmeldung verwendet. Die Anmeldung wird dann im Schritt S303 in der Blockchain 131 hinterlegt.

Im Schritt S304 führt der Handwerker die notwendigen Arbeiten durch und meldet sich vor dem Verlassen des Einsatzortes als Schritt S305 beim Hardware-Wallet 130 ab, was auf dieselbe Weise wie beim Anmelden geschehen kann. Im Schritt S306 wird auch die Abmeldung in der Blockchain 131 hinterlegt.

Auf diese Weise werden die jeweiligen Anwesenheitszeiten des Handwerkers manipulationssicher und lückenlos in der Blockchain 131 protokolliert, die dadurch zur -potentiell sekundengenauen- Abrechnung des geschuldeten Arbeitsentgelts genutzt werden kann.

Für diesen Abrechnungsprozess wird im Schritt S310 zunächst aus der Blockchain 131 die Anwesenheit des Handwerkers rekonstruiert und im Schritt S311 über das Hardware-Wallet 130 abgerechnet. Vorzugsweise erfolgt auch die Bezahlung im Schritt S312 unmittelbar unter Verwendung von im Hardware-Wallet 130 gespeicherten Kryptowährungen. Die Abrechnung bzw. Bezahlung wird ebenfalls in der Blockchain 131 vermerkt.

### Bezugszeichenliste

- 100: Smart-Home-System
- 101: Schaltschrank
- 102: Internet
- 103: Hutschiene
- 110: Kommunikationseinrichtung
- 120: SMGW
- 130: Hardware-Wallet
- 131: Blockchain
- 140: Smart-Home-Zentrale
- 141: Sensorik
- 142: Aktorik
- 150,160: passive Systemkomponenten
- 200: Verfahren zur Lichtmiete
- S201-S206,S210-S212: Verfahrensschritte
- 300: Verfahren zur Arbeitszeitüberwachung
- S301-S306,S310-S312: Verfahrensschritte

## Patentansprüche

1. Smart-Home-System (100) mit einer Kommunikationseinrichtung (110) zur Herstellung einer Verbindung des Smart-Home-Systems (100) zum Internet (102),
**dadurch gekennzeichnet, dass** das Smart-Home-System (100) ein Hardware-Wallet (130) aufweist, das direkt oder indirekt mit der Kommunikationseinrichtung (110) verbunden ist.

2. Smart-Home-System (100) nach Anspruch 1,
**dadurch gekennzeichnet, dass** das Smart-Home-System (100) mindestens eine passive Systemkomponente (150,160) aufweist und dass das Hardware-Wallet (130) direkt oder indirekt mit der mindestens einen passiven Systemkomponente (150,160) verbunden ist.

3. Smart-Home-System (100) nach Anspruch 1 oder 2,
**dadurch gekennzeichnet, dass** das Smart-Home-System (100) mindestens eine aktive Systemkomponente aufweist, die direkt oder indirekt, insbesondere über eine Smart-Home Zentrale (140), mit der Kommunikationseinrichtung (110) zur Herstellung einer Verbindung zum Internet (101) verbunden ist.

4. Smart-Home-System (100) nach Anspruch 3,
**dadurch gekennzeichnet, dass** mindestens eine aktive Systemkomponente direkt oder indirekt mit dem Hardware-Wallet (130) verbunden ist.

5. Smart-Home-System (100) nach einem der Ansprüche 1 bis 4,
**dadurch gekennzeichnet, dass** die Verbindung zum Hardware-Wallet (130) direkt ist und über ein integriertes Bussystem, einen digitalen Eingang oder einen analogen Eingang hergestellt ist.

6. Smart-Home-System (100) nach einem der Ansprüche 1 bis 5,
**dadurch gekennzeichnet, dass** das Hardware-Wallet (130) durch ein Zusatzmodul einer Smart-Home-Zentrale (140) gebildet wird.

7. Verfahren zum Betrieb eines Smart-Home-Systems (100) nach einem der Ansprüche 1 bis 6,
**dadurch gekennzeichnet, dass** digitale Währungen lokal im eigenen Haus gespeichert werden.

8. Verfahren nach Anspruch 7,
**dadurch gekennzeichnet, dass** passive Systemkomponenten (150,160) direkt abrechnungsrelevanten Dienstleistungen zugeführt werden.

9. Verfahren nach Anspruch 7 oder 8,
**dadurch gekennzeichnet, dass** ein Zugang zu Krypto-Bezahlsystemen und Blockchain-Netzwerken für das gesamte Heimnetzwerk geschaffen wird.
